# FASCICULE DE BREVET EUROPEEN

(11) **EP 3 942 156 B1**
(45) Date de publication et mention de la délivrance du brevet: **15.02.2023**
(21) Numéro de dépôt: 20726204.9
(22) Date de dépôt: 16.03.2020
(51) Int. Cl.: F01D 5/18

(54) **INSERT TUBULAIRE DE REFROIDISSEMENT PAR IMPACT POUR UN DISTRIBUTEUR DE TURBOMACHINE**
ROHRFÖRMIGER PRALLKÜHLEINSATZ FÜR TURBOMASCHINENLEITSCHAUFEL
TUBULAR IMPINGEMENT INSERT FOR A TURBOMACHINE VANE

(30) Priorité: 20.03.2019 FR 1902874
(43) Date de publication de la demande: 26.01.2022
(73) Titulaire: SAFRAN AIRCRAFT ENGINES, 75015 Paris (FR); Safran Helicopter Engines, 64510 Bordes (FR)
(72) Inventeur: KLEIN, Guillaume, 77550 MOISSY-CRAMAYEL (FR); VOLLEBREGT, Matthieu, Jean, Luc, 77550 MOISSY-CRAMAYEL (FR); LARDELLIER, Thomas, Joseph, 77550 MOISSY-CRAMAYEL (FR); CARREROT, Guillaume, 77550 MOISSY-CRAMAYEL (FR); LAVIGNOTTE, Stéphane, 77550 MOISSY-CRAMAYEL (FR)
(74) Mandataire: Gevers & Orès
(86) Numéro de dépôt international: PCT/FR2020/050548
(87) Numéro de publication internationale: WO 2020/188212

(56) Documents cités:
- EP-A1- 3 382 150
- FR-A1- 2 094 033
- US-A1- 2010 129 196
- US-A1- 2017 067 363
- US-A1- 2018 371 920

## Description

### Domaine technique de l'invention

La présente invention concerne le domaine des turbomachines notamment des moteurs à turbine à gaz et vise plus particulièrement les distributeurs de turbine et leur ventilation.

### Arrière-plan technique

Dans un moteur à turbine à gaz, l'air entrant est comprimé dans au moins un compresseur avant d'être mélangé à un carburant et brûlé dans une chambre de combustion. Les gaz chauds produits dans la chambre entraînent la ou les turbines aval puis sont éjectés dans une tuyère. Les différents étages de turbine comprennent des roues aubagées de rotor et des distributeurs de stator. Chaque distributeur comprend deux plateformes annulaires, respectivement interne et externe, entre lesquelles s'étendent des pales sensiblement radiales. En raison de la température des gaz circulant dans la turbine, les pales des distributeurs sont soumises à des conditions de fonctionnement très sévères. Les pales des distributeurs doivent donc être refroidies pour conserver une durée de vie acceptable.

Dans la technique actuelle, une pale de distributeur est tubulaire et comprend une cavité interne dans laquelle est montée une chemise tubulaire multiperforée.

De telles chemises sont par exemple décrites dans les documents FR-A1-2 899 271, FR-A1-2 872 541, FR-A1-2 976 616, EP-A1-1 847 687, US-A1-2018/371920, US-A1-2010/129196 et US-A1-2017/067363.

Selon un exemple de réalisation, les deux plateformes et la pale forment une seule pièce venue de fonderie. Selon un autre exemple de réalisation, les deux plateformes et la pale forment une pièce obtenue par brasage de deux mono-pales de fonderie. La chemise est fabriquée par formage de tôle et est configurée pour être maintenue dans la cavité interne de la pale, à distance des parois de la pale pour permettre à la fois l'impact des filets d'air sur la paroi et la circulation d'air dans l'espace ainsi ménagé. Une ouverture dans la plateforme extérieure alimente la chemise en air de refroidissement prélevé au compresseur par exemple.

Une partie de cet air passe par des orifices ménagés dans des parois de la chemise et vient refroidir la paroi de la pale par impact. Cet air s'écoule ensuite vers l'aval où il est évacué dans la veine de gaz par des perforations prévues le long de la paroi du bord de fuite de la pale. Il est à noter que la face interne de la paroi de la pale est éventuellement pourvue d'éléments perturbateurs d'écoulement qui favorisent les échanges thermiques entre l'air circulant dans la cavité et la paroi. Au montage, la chemise qui a été préalablement mise en forme est glissée dans la cavité de la pale à travers l'ouverture ménagée dans la plateforme extérieure. La chemise est ensuite rendue solidaire de la pale par soudage ou brasage le long de son bord en contact avec la paroi de l'ouverture ménagée dans la plateforme extérieure. La partie opposée de la chemise est guidée dans l'ouverture ménagée dans la plateforme intérieure de la pale qui forme une glissière pour autoriser les déplacements relatifs entre la pale et la chemise. Ces déplacements longitudinaux sont dus aux variations de température pendant le fonctionnement de la turbomachine et au fait que les deux pièces diffèrent par la nature des matériaux qui les constituent et leur mode de fabrication.

Un mode particulier de réalisation de la chemise à l'intérieur de la cavité est décrit dans le brevet au nom de la Demanderesse, EP-A1-1 508 670.

Dans la technique actuelle, le procédé de fabrication d'une telle chemise nécessite plusieurs étapes à savoir une étape de pliage d'une tôle, une étape de soudage de la tôle pour former un tube et une étape d'usinage par électro érosion (encore connu sous l'acronyme EDM pour « *Electrical Discharge Machining* » en langue anglaise) du tube pour le perforer. Ce procédé est cependant long et coûteux.

Un but de la présente invention est de remédier à cet inconvénient en proposant une chemise de ventilation configurée pour permettre sa fabrication par un procédé rapide et économique, par exemple par fabrication additive.

### Résumé de l'invention

A cet effet, l'invention concerne une chemise tubulaire de ventilation pour un distributeur de turbomachine, en particulier d'aéronef, la chemise ayant une forme générale allongée le long d'un axe et comportant une paroi tubulaire perforée autour de cet axe, une des extrémités axiale de la chemise étant ouverte et l'autre étant fermée par une paroi de fond, la chemise comprenant en outre des poutres de soutien lors de la réalisation de la chemise par fabrication additive, ces poutres s'étendant à l'intérieur de la chemise, entre la paroi tubulaire et la paroi de fond et présentant une section longitudinale de forme générale triangulaire dont deux cotés sont reliés respectivement à la paroi tubulaire et à la paroi de fond, et dont le dernier coté est libre et s'étend à l'intérieur de la chemise, des perforations de la paroi tubulaire étant ménagées entre les poutres de soutien.

Une telle chemise selon l'invention présente ainsi des aménagements autorisant sa conception par fabrication additive, qui est un procédé rapide et économique. En effet, les poutres qui s'étendent à l'intérieur de la paroi de fond renforcent cette paroi de fond et évite son affaissement en cours de fabrication additive (autrement dit, le fond ne présente pas une forme plane et par conséquent, en porte à faux, qui ne peut être fabriqué par un procédé de fabrication additive sur lit de poudre sans nécessiter de moyens de support). La chemise selon l'invention est donc ainsi particulièrement adaptée pour être fabriquée par fabrication additive. Sans ces poutres, la chemise selon l'invention ne serait pas réalisable par ce procédé.

De préférence, chaque poutre a, au niveau de son coté relié à la paroi de fond, une épaisseur de matière supérieure au reste de la poutre.

Avantageusement, les poutres recouvrent sensiblement la totalité de la surface interne de la paroi de fond.

Ainsi, les poutres soutiennent et rigidifient la paroi de fond permettant ainsi la conception de la chemise par fabrication additive.

De préférence, les poutres sont séparées en deux séries qui s'étendent respectivement de part et d'autre d'une droite s'étendant dans la paroi de fond, chaque poutre ayant une extrémité en partie située au niveau de cette droite.

Avantageusement, la paroi tubulaire comprend des perforations de forme polygonale, par exemple en carré ou en losange.

Avantageusement, les perforations sont sensiblement identiques et sont positionnées de façon à ce que l'un de leurs sommets soit orienté du coté de la paroi de fond.

Ainsi, la forme et le positionnement des perforations rend possible leur conception par fabrication additive.

Avantageusement, la paroi de fond comprend, à l'extérieur de la chemise, des rainures d'évidement partiel des poutres.

Ainsi, la masse totale de la chemise est réduite.

La présente invention concerne encore un distributeur de turbine pour une turbomachine d'aéronef, comportant des plateformes interne et externe reliées ensembles par des pales tubulaires dans lesquelles sont montées des chemises comprenant l'une quelconque des caractéristiques susmentionnées ainsi qu'une turbomachine d'aéronef comportant un distributeur de turbine selon l'invention.

La présente invention concerne également un procédé de réalisation d'une chemise tubulaire de ventilation pour un distributeur de turbomachine selon l'invention, comprenant la fabrication additive de cette chemise sur un support en commençant par réaliser l'extrémité ouverte et en finissant pas l'extrémité fermée de la chemise.

### Brève description des figures

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig.1] la figure 1 est une vue schématique en perspective d'un secteur de distributeur de l'art antérieur ;
[Fig.2] la figure 2 est une vue en coupe d'une pale de distributeur selon l'art antérieur ;
[Fig.3] la figure 3 est une vue en perspective illustrant une chemise de ventilation selon l'invention ;
[Fig.4] la figure 4 est une vue en coupe longitudinale d'un exemple de réalisation de la chemise de ventilation selon l'invention ;
[Fig.5] la figure 5 est une vue de détail en perspective et avec arrachement partiel illustrant la surface interne de la paroi de fond de la chemise de ventilation selon l'invention ;
[Fig.6a-6c] les figures 6a à 6c illustrent, schématiquement, des étapes successives de la conception par fabrication additive d'une portion de la chemise de ventilation selon l'invention ;
[Fig.7] la figure 7 est une vue partielle en coupe et à caractère schématique d'un exemple de réalisation de la paroi de fond de la chemise de ventilation selon l'invention.

### Description détaillée de l'invention

Par convention, dans la présente demande, le terme « aval » est défini par rapport au sens de circulation des gaz dans une turbomachine en fonctionnement. De même, par convention dans la présente demande, les termes « interne » et « externe » sont définis axialement par rapport à axe longitudinal de la chemise, et les termes « intérieur » et « extérieur » sont définis radialement par rapport à un axe longitudinal de la turbomachine.

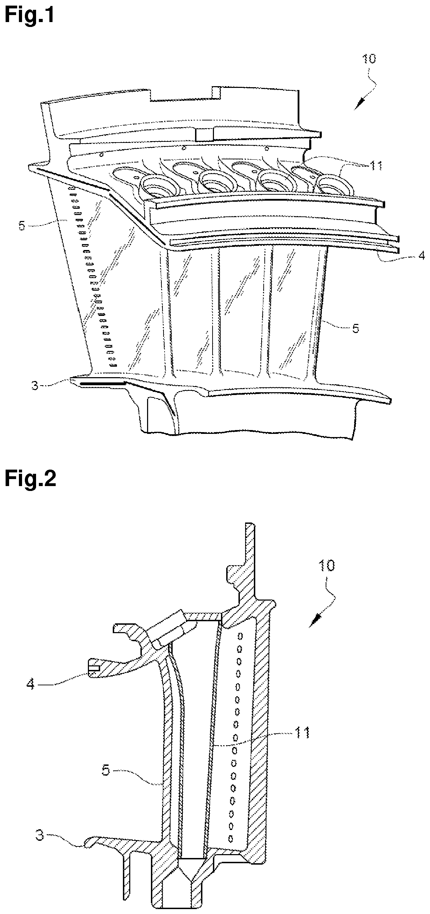

En figure 1, la référence 10 désigne un distributeur de turbine d'une turbomachine telle qu'un turboréacteur ou un turbopropulseur d'avion, ce distributeur 10 comprenant des plateformes annulaires coaxiales, respectivement interne 3 et externe 4, qui délimitent entre elles la veine annulaire d'écoulement des gaz dans la turbine et entre lesquelles s'étendent radialement des pales 5.

La figure 2 illustre une vue en coupe d'une pale 5 de distributeur 10 munie d'une chemise de ventilation 11 selon l'art antérieur. La pale 5 du distributeur 10 comprend une cavité interne dans laquelle est montée une chemise tubulaire perforée 11 de circulation d'air de ventilation provenant d'une enceinte d'alimentation, radialement externe à la plate-forme externe 4 du distributeur. Cet air passe en partie à travers des perforations de la chemise 11, impacte la paroi interne de la pale 5 pour son refroidissement, puis est évacué dans la veine d'écoulement des gaz de la turbine. L'air de ventilation est prélevé en amont sur un compresseur de la turbomachine et amené dans l'enceinte d'alimentation par des conduits non représentés. L'extrémité radialement externe de la chemise 11 est ouverte pour son alimentation en air et son extrémité radialement interne peut être ouverte, comme dans la figure 2. Dans l'invention, elle est toutefois fermée.

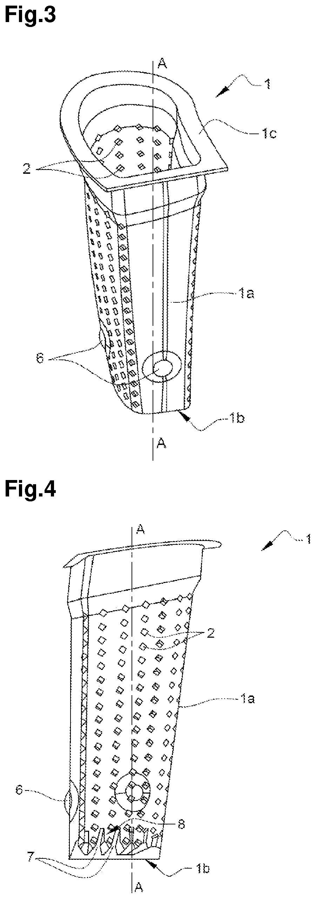

Selon l'exemple de réalisation illustré à la figure 3, la chemise 1 tubulaire de ventilation présente une forme générale allongée le long d'un axe longitudinal A-A. Cette chemise comporte une paroi tubulaire périphérique 1a autour de cet axe longitudinal A-A munie d'une pluralité de perforations 2. L'une des extrémités axiales de la chemise est ouverte tandis que l'autre est fermée par une paroi de fond 1b, (contrairement donc à la chemise 11 de l'art antérieur illustrée à la figure 2).

La chemise 1 est destinée à équiper un distributeur 10 de turbomachine, en particulier d'aéronef. La chemise 1 selon l'invention est logée, de manière connue en soi, dans une cavité de l'une des pales 5 du distributeur 10.

Au montage, la chemise 1 est configurée pour être glissée dans la cavité de la pale à travers l'ouverture ménagée dans la plateforme extérieure 4.

La chemise 1 comporte notamment des bossages 6 en saillie sur la surface externe de sa paroi tubulaire périphérique (figure 3). Ces bossages, formés de manière connue en soi, par exemple par emboutissage, sont disposés à proximité de l'extrémité axiale fermée de la chemise 1 et maintiennent la chemise à distance des parois de la pale pour permettre à la fois l'impact des filets d'air sur la paroi et la circulation de l'air dans l'espace ainsi ménagé.

La chemise 1 est ensuite rendue solidaire de la pale par soudage ou brasage le long de son bord en contact avec la paroi de l'ouverture ménagée dans la plateforme extérieure 4. L'extrémité axiale ouverte de la chemise 1 est avantageusement munie d'une collerette 1c permettant la solidarisation de la chemise et de la pale.

De manière connue en soi, une ouverture ménagée dans la plateforme extérieure 4 alimente la chemise 1 en air de refroidissement, par exemple prélevé au compresseur. Cet air de refroidissement passe par les perforations 2 de la chemise et vient refroidir la paroi de la pale par impact. La chemise 1 présentant une extrémité radialement interne fermée par la paroi de fond 1b, la totalité de l'air de refroidissement s'écoulant dans la chemise 1 à travers les perforations 2 s'écoule ensuite vers l'aval où il est évacué dans la veine de gaz par des perforations prévues le long de la paroi du bord de fuite de la pale.

Selon l'invention, la chemise 1 comprend en outre des poutres 7 de soutien s'étendant à l'intérieur de la chemise, entre la paroi tubulaire périphérique 1a et la paroi de fond 1b. Des perforations 2 de la paroi tubulaire 1a de la chemise 1 sont ménagées entre les poutres 7 de soutien.

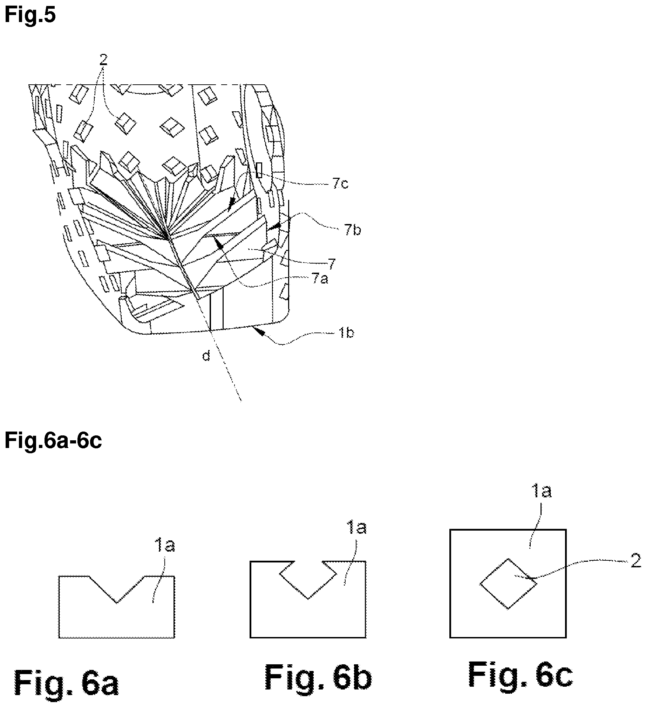

En référence aux figures 4 et 5, chaque poutre 7 présente une section longitudinale de forme générale triangulaire. Un premier coté 7a, dit coté horizontal, des poutres 7 est relié à la paroi de fond 1b de la chemise 1, un second coté 7b, dit côté vertical, des poutres 7 est relié à la paroi tubulaire 1a de la chemise 1, et un troisième coté 7c, dit coté oblique, est libre et s'étend à l'intérieur de la chemise 1. Ainsi, lors de la fabrication additive de la chemise, la paroi de fond 1b sera rigidifiée et soutenue par les poutres 7, autorisant la conception de la chemise 1. En effet, par la présence des poutres 7, la paroi de fond 1b de la chemise 1 ne présente pas une forme plane (sans inégalité de niveaux) mais comprend une succession de créneaux formant un relief sensiblement en dents de scie facilitant et simplifiant la construction de la chemise 1 par fabrication additive sur lit de poudre. En effet, cette forme que présente la paroi de fond 1b de la chemise 1 par la présence des poutres 7 permet de se dispenser de l'utilisation d'éléments de soutien lors de la fabrication de la paroi de fond 1b.

En effet, cette forme triangulaire des poutres 7 correspond à des angles de dépouille sur les côtés libres des poutres 7 s'étendant à l'intérieur de la chemise d'au moins 30° et, de préférence, de l'ordre de 45°, garantissant la fabrication et la superposition des couches successives par fabrication additive, chaque couche fabriquée permettant de supporter la couche suivante pendant la fabrication.

Avantageusement, dans des portions de la paroi tubulaire 1a auxquelles sont reliés des poutres 7 par un de leurs cotés, l'épaisseur de la paroi tubulaire 1a est localement plus importante que dans une portion restante de la paroi tubulaire 1a, et notamment dans les portions de la paroi tubulaire 1a situées entre deux poutres 7 adjacentes encore appelées espaces inter-poutres 8. Ainsi, les perforations 2 étant ménagées entre deux poutres 7 adjacentes (dans un espace inter-poutres 8), une longueur des perforations 2 est optimale pour assurer le refroidissement de la pale. De plus, ces espaces inter-poutres permettent de réduire la masse totale de la chemise 1.

Chaque poutre 7 présente, au niveau de son coté relié à la paroi de fond 1b, une épaisseur de matière supérieure au reste de la poutre et l'ensemble des poutres 7 recouvrent, avantageusement, sensiblement la totalité de la surface interne de la paroi de fond 1b. Les poutres 7 sont séparées en deux séries qui s'étendent respectivement de part et d'autre d'une droite d s'étendant dans la paroi de fond 1b, chaque poutre ayant une extrémité en partie située au niveau de cette droite.

Avantageusement, les perforations 2 sont de forme polygonale, par exemple en carré ou en losange. Les perforations 2 sont sensiblement identiques et sont positionnées de façon à ce que l'un de leurs sommets soit orienté du coté de la paroi de fond. Ainsi, la forme et le positionnement des perforations 2 rend possible leur conception par fabrication additive, chaque couche fabriquée permettant de supporter la couche suivante pendant des étapes successive de la fabrication additive, comme détaillé ci-après, en référence aux figures 6a, 6b et 6c.

Les dimensions des perforations 2 sont déterminées de sorte à assurer un refroidissement optimal de la pale.

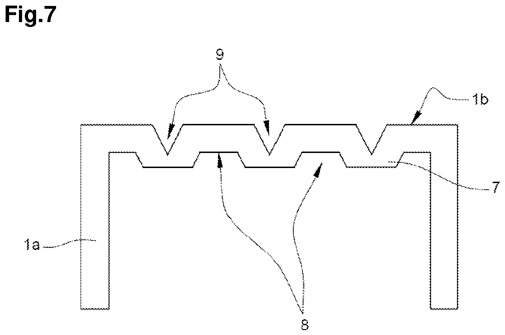

Avantageusement, comme illustré à la figure 7, des rainures 9 sont ménagées dans la surface externe de la paroi de fond 1b, en regard des cotés des poutres 7 reliés à la paroi de fond 1b. L'axe longitudinal des rainures 9 est sensiblement parallèle à l'axe longitudinal des cotés des poutres 7 reliés à la paroi de fond 1b. Ces rainures 9 évident partiellement les poutres 7 et ont pour fonction d'alléger la chemise 1. Ainsi, la masse totale de la chemise de ventilation est encore réduite.

La présente invention concerne encore un distributeur de turbine pour une turbomachine d'aéronef, comportant des plateformes interne 12 et externe 14 reliées ensembles par des pales tubulaires dans lesquelles sont montées des chemises 1 selon l'invention ainsi qu'une turbomachine d'aéronef comportant un distributeur de turbine selon l'invention.

La présente invention concerne également un procédé de réalisation d'une chemise 1 tubulaire de ventilation pour un distributeur de turbomachine selon l'invention, par fabrication additive de cette chemise sur un support en commençant par réaliser l'extrémité ouverte et en finissant pas l'extrémité fermée de la chemise 1.

Selon le procédé de l'invention, de la matière de base de constitution de la chemise 1 est déposée sur un support. Cette matière de base est par exemple sous forme de liquide, de poudre, de ruban ou de fil, de sorte à constituer une couche. La matière de base est mise en forme, de manière connue en soi, par exemple par frittage laser. Puis de la matière de base est de nouveau déposée sur cette première couche afin d'être mise en forme, et ainsi de suite, de sorte à réaliser plusieurs couches successives de matière les unes au dessus des autres.

Dans un premier temps, la matière de base est mise en forme de sorte à constituer une première couche en forme de virgule annulaire tronquée pleine d'une première épaisseur formant une couche constitutive de la collerette 1c de la chemise 1. La collerette 1c est entièrement formée après une succession d'une première pluralité de couches de matière mise en forme en forme de virgule annulaire tronquée d'une première épaisseur.

Ensuite, la matière de base est mise en forme de sorte à constituer une nouvelle couche en forme de virgule annulaire tronquée d'une seconde épaisseur inférieure à la première épaisseur de la collerette 1c, cette nouvelle couche formant une couche constitutive de la paroi tubulaire périphérique 1a de la chemise 1. La paroi tubulaire périphérique 1a est entièrement formée après une succession d'une seconde pluralité de couches de matière mise en forme en forme de virgule annulaire tronquée d'une seconde épaisseur. Le nombre de couches permettant de réaliser la paroi tubulaire périphérique 1a étant par conséquent supérieur au nombre de couches permettant de réaliser la collerette 1c.

Les figures 6a, 6b, 6c illustrent de manière schématique des étapes successives de la fabrication de la paroi tubulaire périphérique 1a au niveau d'une perforation 2.

La forme et le positionnement des perforations sont tels que chaque couche fabriquée permet de supporter la couche suivante pendant des étapes successive. En effet, la mise en forme de la matière de base en couches successives crée d'abord une ouverture en forme de V en commençant par la pointe de la forme en V, la matière n'étant pas mise en forme entre les deux branches du V (figure 6a). La matière est ensuite successivement mise en forme entre les branches du V de sorte que chaque nouvelle couche ferme un peu plus l'ouverture en forme de V (figure 6b) jusqu'à la fermer entièrement et former la perforation 2 polygonale (figure 6c).

Les couches constituant la paroi tubulaire périphérique 1a présentent, localement une épaisseur supérieure à la seconde épaisseur de sorte à constituer les bossages 6.

Enfin, la matière de base est mise en forme de sorte à constituer une nouvelle couche de forme de virgule annulaire tronquée présentant sur une face interne une pluralité d'ergots constitués par des portions de poutres 7 situés à l'intersection de leurs côtés dits verticaux 7b et obliques 7c.

Les poutres 7 sont entièrement formées après une succession d'une troisième pluralité de couches de matière mise en forme, l'épaisseur des portions de poutres 7 augmentant à chaque nouvelle couche jusqu'à atteindre la droite d, créant ainsi la paroi de fond 1b de la chemise 1, tenant également compte d'éventuelles rainures 9 d'évidement partiel des poutres 7.

## Revendications

1. Chemise (1) tubulaire de ventilation pour un distributeur de turbomachine, en particulier d'aéronef, la chemise ayant une forme générale allongée le long d'un axe (A-A) et comportant une paroi tubulaire (1a) perforée autour de cet axe, une des extrémités axiales de la chemise étant ouverte et l'autre étant fermée par une paroi de fond (1b), ladite chemise comprenant en outre des poutres (7) de soutien lors de la réalisation de la chemise (1) par fabrication additive, les poutres (7) s'étendent à l'intérieur de la chemise (1), des perforations (2) de la paroi tubulaire (1a) étant ménagées entre les poutres (7) de soutien, ladite chemise étant **caractérisée en ce que** les poutres (7) s'étendent entre la paroi tubulaire (1a) et la paroi de fond (1b) et présentent une section longitudinale de forme générale triangulaire dont deux côtés sont reliés respectivement à la paroi tubulaire (1a) et à la paroi de fond (1b), et dont le dernier côté est libre et s'étend à l'intérieur de la chemise.

2. Chemise (1) selon la revendication 1, dans laquelle chaque poutre (7) a, au niveau de son côté relié à la paroi de fond (1b), une épaisseur de matière supérieure au reste de la poutre.

3. Chemise (1) selon l'une quelconque des revendications précédentes, dans laquelle les poutres (7) recouvrent sensiblement la totalité de la surface interne de la paroi de fond (1b).

4. Chemise (1) selon l'une quelconque des revendications précédentes, dans laquelle les poutres (7) sont séparées en deux séries qui s'étendent respectivement de part et d'autre d'une droite (d) s'étendant dans la paroi de fond (1b), chaque poutre ayant une extrémité en partie située au niveau de cette droite.

5. Chemise (1) selon l'une quelconque des revendications précédentes, dans laquelle la paroi tubulaire (1a) comprend des perforations (2) de forme polygonale, par exemple en carré ou en losange.

6. Chemise (1) selon la revendication précédente, dans laquelle les perforations (2) sont sensiblement identiques et sont positionnées de façon à ce que l'un de leurs sommets soit orienté du côté de la paroi de fond (1b).

7. Chemise (1) selon la revendication précédente, dans laquelle la paroi de fond (1b) comprend, à l'extérieur de la chemise (1), des rainures (9) d'évidement partiel des poutres (7).

8. Distributeur de turbine (10) pour une turbomachine d'aéronef, comportant des plateformes interne (3) et externe (4) reliées ensemble par des pales tubulaires dans lesquelles sont montées des chemises (1) selon l'une quelconque des revendications 1 à 7.

9. Turbomachine d'aéronef comportant un distributeur de turbine (10) selon la revendication 8.

10. Procédé de réalisation d'une chemise (1) selon l'une quelconque des revendications 1 à 7, comprenant la fabrication additive de cette chemise sur un support en commençant par réaliser l'extrémité ouverte et en finissant par l'extrémité fermée de la chemise.

## Patentansprüche

1. Röhrenförmiger Belüftungsmantel (1) für einen Turbomaschinen-Verteiler, insbesondere eines Luftfahrzeugs, wobei der Mantel eine allgemeine Form aufweist, die entlang einer Achse (A-A) gestreckt ist und um diese Achse eine perforierte röhrenförmige Wand (1a) umfasst, wobei eines der axialen Enden des Mantels offen ist, und das andere von einer Bodenwand (1b) verschlossen ist, wobei der Mantel außerdem Stützträger (7) bei der Herstellung des Mantels (1) durch additive Herstellung umfasst, wobei sich die Träger (7) in dem Inneren des Mantels (1) erstrecken, wobei Perforationen (2) der röhrenförmigen Wand (1a) zwischen den Stützträgern (7) eingerichtet sind, wobei der Mantel **dadurch gekennzeichnet ist, dass** sich die Träger (7) zwischen der röhrenförmigen Wand (1a) und der Bodenwand (1b) erstrecken und einen Längsquerschnitt mit allgemein dreieckiger Form aufweisen, von der zwei Seiten jeweils mit der röhrenförmigen Wand (1a) und der Bodenwand (1b) verbunden sind, und dessen letzte Seite frei ist und sich in dem Inneren des Mantels erstreckt.

2. Mantel (1) nach dem Anspruch 1, wobei jeder Träger (7) auf der Ebene seiner Seite, die mit der Bodenwand (1b) verbunden ist, eine Materialdicke aufweist, die größer ist als die des Rests des Trägers.

3. Mantel (1) nach einem der vorstehenden Ansprüche, wobei die Träger (7) im Wesentlichen die gesamte innere Oberfläche der Bodenwand (1b) bedecken.

4. Mantel (1) nach einem der vorstehenden Ansprüche, wobei die Träger (7) in zwei Reihen getrennt sind, die sich jeweils auf jeder Seite einer Geraden (d) erstrecken, die sich in der Bodenwand (1b) erstreckt, wobei jeder Träger ein Ende aufweist, das zum Teil auf der Ebene dieser Geraden liegt.

5. Mantel (1) nach einem der vorstehenden Ansprüche, wobei die röhrenförmige Wand (1a) Perforationen (2) in Vieleckform, beispielsweise Quadrat oder Raute, umfasst.

6. Mantel (1) nach dem vorstehenden Anspruch, wobei die Perforationen (2) im Wesentlichen identisch sind und derart positioniert sind, dass einer ihrer Scheitel auf der Seite der Bodenwand (1b) ausgerichtet ist.

7. Mantel (1) nach dem vorstehenden Anspruch, wobei die Bodenwand (1b) außerhalb des Mantels (1) Nuten (9) zum teilweisen Aushöhlen der Träger (7) umfasst.

8. Turbinenverteiler (10) für Luftfahrzeugturbomaschine, der eine innere (3) und eine äußere Plattform (4) umfasst, die durch röhrenförmige Schaufeln verbunden sind, in welchen Mäntel (1) nach einem der Ansprüche 1 bis 7 montiert sind.

9. Luftfahrzeugturbomaschine, die einen Turbomaschinen-Verteiler (10) nach Anspruch 8 umfasst.

10. Verfahren zur Herstellung eines Mantels (1) nach einem der Ansprüche 1 bis 7, das die additive Herstellung dieses Mantels auf einem Träger unter Beginnen mit dem Herstellen des offenen Endes und Beenden mit dem geschlossenen Ende des Mantels umfasst.

## Claims

1. A tubular ventilation sleeve (1) for a turbomachine distributor, in particular for an aircraft, the sleeve having a generally elongated shape along an axis (A-A) and comprising a tubular wall (1a) perforated around this axis, one of the axial ends of the sleeve being open and the other being closed by a bottom wall (1b), said sleeve further comprising support beams (7) when the sleeve (1) is made by additive manufacturing, said support beams (7) extending inside the sleeve (1), perforations (2) in the tubular wall (1a) being provided between the support beams (7), said sleeve being **characterized in that** the beams (7) extend between the tubular wall (1a) and the bottom wall (1b) and have a longitudinal cross-section with a generally triangular shape, two sides of which are respectively connected to the tubular wall (1a) and to the bottom wall (1b), and the last side of which is free and extends inside the sleeve.

2. The sleeve (1) according to claim 1, wherein each beam (7) has, at the level of its side connected to the bottom wall (1b), a greater thickness of material than the rest of the beam.

3. The sleeve (1) according to any one of the preceding claims, wherein the beams (7) cover substantially the entire internal surface of the bottom wall (1b).

4. The sleeve (1) according to any one of the preceding claims, wherein the beams (7) are separated into two series which extend respectively on either side of a straight line (d) extending in the bottom wall (1b), each beam having an end partly located at the level of this straight line.

5. The sleeve (1) according to any one of the preceding claims, wherein the tubular wall (1a) comprises perforations (2) of polygonal shape, for example square or diamond-shaped.

6. The sleeve (1) according to the preceding claim, wherein the perforations (2) are substantially identical and are positioned so that one of their vertices is oriented on the side of the bottom wall (1b).

7. The sleeve (1) according to the preceding claim, wherein the bottom wall (1b) comprises, outside the sleeve (1), grooves (9) for partial recessing of the beams (7).

8. A turbine distributor (10) for an aircraft turbomachine, comprising internal (3) and external (4) platforms connected together by tubular blades in which are mounted sleeves (1) according to any one of claims 1 to 7.

9. An aircraft turbomachine comprising a turbine distributor (10) according to claim 8.

10. A method for making a sleeve (1) according to any one of claims 1 to 7, comprising the additive manufacturing of said sleeve on a support starting by making the open end and ending with the closed end of the sleeve.
